# EUROPEAN PATENT APPLICATION

(11) **EP 3 859 548 A1**
(43) Date of publication of application: **04.08.2021**
(21) Application number: 21154465.5
(22) Date of filing: 30.01.2021
(51) Int. Cl.: G06F 16/182, G06F 21/62, G06F 40/197, H04L 29/08

(54) **SYSTEMS AND METHODS FOR PUSHING UNIVERSAL PROFILE UPDATES**

(30) Priority: 30.01.2020 US 202062967959 P; 31.03.2020 US 202016835898
(71) Applicant: Proofpoint, Inc., Sunnyvale, CA 94085 (US); Dorie Anthony Lawrence, Sunnyvale, CA 94085 (US); Liu, Gang, Sunnyvale, CA 94085 (US); Gao, Yue, Sunnyvale, CA 94085 (US)
(72) Inventor: Dorie, Anthony Lawrence, Sunnyvale, California 94085 (US); Liu, Gang, Sunnyvale, California 94085 (US); Gao, Yue, Sunnyvale, California 94085 (US)
(74) Representative: Käck, Stefan

(57) **Abstract**

A universal profile management system receives (501) a profile update to multiple user profiles stored on disparate media platforms, the multiple user profiles associated with a public-facing individual, the public-facing individual registered with the universal profile management system and subject to regulatory requirements. The universal profile management system applies (505) a rule to the profile update and determines (510) whether the profile update violates the rule. If so, publication of the profile update to the multiple user profiles on the disparate media platforms is denied (515). If the profile update does not violate the rule, the universal profile management system modifies (525) a universal profile stored in a central repository for the public-facing individual and publishes (530) the profile update to the multiple user profiles on the disparate media platforms. Re-application of the rule can trigger an update to the universal profile and publication of the update to the multiple user profiles across disparate media platforms.

## Description

### TECHNICAL FIELD

This invention relates generally to digital risk management. More particularly, this invention relates to systems, methods, and computer program products for pushing or publishing universal profile updates across disparate social media platforms and/or channels.

### BACKGROUND OF THE RELATED ART

Organizations in regulated industries may require review and approval of organization-related profile information (e.g., job titles in user profiles) that is shared through public media (e.g., social media) by individuals related to the organizations (e.g., employees, consultants, etc.). Because each individual may have multiple different media accounts, the review and approval process can involve examining, reviewing, approving, and publishing profile information through different workflows, each for one of the multiple media accounts. This mostly manual process can be very inefficient, time-consuming, burdensome, costly, and even risky. Further, because different media platforms, networks, and/or channels (hereinafter "platforms") may have disparate content rules applicable to different types of profile information, it can be difficult to ensure that application of content rules and reviews of profile information are consistent across disparate media platforms.

In view of the foregoing, there is a need for a network-based, computer implemented solution that can automatically programmatically push or otherwise publish universal profile updates across different media platform in an efficient, effective, consistent, reliable, and reproducible manner. Embodiments of an invention disclosed herein can address this need and more.

### SUMMARY OF THE DISCLOSURE

A goal of the invention disclosed herein is to reduce the inefficiency and potential risk associated with updating user profiles shared through disparate media platforms. In some embodiments, this goal is achieved in a network-based, computer-implemented system that maintains a universal profile in a central repository. The system is adapted for automatically examining a profile update for an individual, performing a consolidated process of applying one or more rules to the profile update, and pushing an approved profile update across disparate media platforms.

A profile for an employee of an enterprise can contain many pieces of information (e.g., attributes, settings, field values, etc.) that might be of interest to the enterprise. For example, a profile can include, but is not limited to, a company disclaimer, certification, branch address, job title, employer's name, skills, etc. Some of the fields may be platform-specific.

In some embodiments, profile updates (e.g., title, address, email, etc.) from an individual are received through a portal of a universal profile management system disclosed herein. For instance, a user of the system can log into the portal and select media platform(s) for profile review and approval. The universal profile management system is adapted for monitoring unauthorized or otherwise inappropriate profile updates on behalf of an enterprise (e.g., an employer of the user).

In some embodiments, the universal profile management system includes a profile update monitor that can work in conjunction with an enterprise's profile review and approval workflow. This has a benefit of increasing flexibility on the part of the profile update review, while still allowing the enterprise to control the overall profile review and approval process.

In some embodiments, the universal profile management system further includes a rules database for storing rules applicable to user profiles subject to enterprise policies (e.g., for compliance purposes). The universal profile management system applies the rules to each profile update. If a profile update violates a rule, publication of the profile update is prohibited and the individual's profile is reverted to a prior state and/or a manual review of the profile update is initiated (e.g., flagged for manual review according to policies set by an organization).

In some embodiments, the universal profile management system maintains, for each user registered with the system, a universal profile in a central repository. The universal profile is linked to multiple media accounts and stores, e.g., in a universal profile table, properties or attributes common to disparate media platforms. If a profile update does not violate any rule, the universal profile is modified to reflect the profile update. Profile updates which satisfy the rules and/or are approved after review are normalized and stored in the universal profile table. Through the portal provided by the universal profile management system, multiple media platforms (e.g., TWITTER, FACEBOOK, etc.) can be selected for publication of a profile update without the need for separate application of rules or separate reviews of the profile update. In some embodiments, at runtime, the universal profile management system can map field(s) of a universal profile relating to an approved profile update to those of the selected media platforms, respectively, prepare individual requests (e.g., API calls), and push the profile update across the selected media platforms. In some embodiments, an update to the rules may trigger re-application of the rules to the universal profiles stored in the central repository and publication of profile updates to disparate media platforms.

In some embodiments, verified information stored in the universal profile table can be used as a source of truth to verify requested profile updates. This has a benefit of bypassing the review portion of the workflow and streamlining the approval process to thereby shorten the approval time for profile updates.

One embodiment may comprise a system having a processor and a memory and configured to implement the universal profile management method disclosed herein. One embodiment may comprise a computer program product that comprises a non-transitory computer-readable storage medium storing computer instructions that are executable by a processor to perform the universal profile management method disclosed herein. Numerous other embodiments are also possible.

These, and other, aspects of the disclosure will be better appreciated and understood when considered in conjunction with the following description and the accompanying drawings. It should be understood, however, that the following description, while indicating various embodiments of the disclosure and numerous specific details thereof, is given by way of illustration and not of limitation. Many substitutions, modifications, additions and/or rearrangements may be made within the scope of the disclosure without departing from the spirit thereof, and the disclosure includes all such substitutions, modifications, additions and/or rearrangements.

### BRIEF DESCRIPTION OF THE DRAWINGS

The drawings accompanying and forming part of this specification are included to depict certain aspects of the invention. A clearer impression of the invention, and of the components and operation of systems provided with the invention, will become more readily apparent by referring to the exemplary, and therefore non-limiting, embodiments illustrated in the drawings, wherein identical reference numerals designate the same components. Note that the features illustrated in the drawings are not necessarily drawn to scale.
FIG. 1 depicts a diagrammatic representation of a network computing environment illustrating a prior solution for updating a user profile across disparate media platforms.
FIG. 2 depicts a diagrammatic representation of a network computing environment illustrating another prior solution for updating a user profile across disparate media platforms.
FIG. 3 depicts a diagrammatic representation of a network computing environment where embodiments of a universal profile management system disclosed herein can be implemented.
FIG. 4 is a flow chart illustrating a process for creating and storing rules used by a universal profile management system disclosed herein according to some embodiments.
FIG. 5 is a flow diagram illustrating a method for processing a profile update according to some embodiments.
FIG. 6 depicts a diagrammatic representation of a data processing system for implementing a universal profile management system disclosed herein.

### DETAILED DESCRIPTION

The disclosure and various features and advantageous details thereof are explained more fully with reference to the exemplary, and therefore non-limiting, embodiments illustrated in the accompanying drawings and detailed in the following description. It should be understood, however, that the detailed description and the specific examples, while indicating the preferred embodiments, are given by way of illustration only and not by way of limitation. Descriptions of known programming techniques, computer software, hardware, operating platforms and protocols may be omitted so as not to unnecessarily obscure the disclosure in detail. Various substitutions, modifications, additions and/or rearrangements within the scope of the underlying inventive concept will become apparent to those skilled in the art from this disclosure.

As alluded to above, some organizations such as those in the financial industry may need to comply with certain regulations - rules and administrative codes issued by governmental agencies at the municipal, county, state, and federal levels. For example, in a regulated environment, a financial representative's profile may be considered as advertising content. Thus, the financial representative's profile information may need to be reviewed (controlled) and approved in a review and approval process.

This review and approval process may vary from media platform to media platform because different regulatory requirements may apply to different media platforms. For instance, online media platforms (e.g., emails, websites, social media applications, etc.) may be required to provide privacy notices, while offline media platforms (e.g., newspaper, flyers, posters, magazines, brochures, banners, signs, yellow pages, etc.) may not be required to do so. Nevertheless, if the financial representative's employer (e.g., a financial institution) wishes to publish the financial representative's profile to multiple media platforms, the financial representative's profile must be reviewed and approved for publication for each of the multiple media platforms. This review and approval process can be accomplished in various ways.

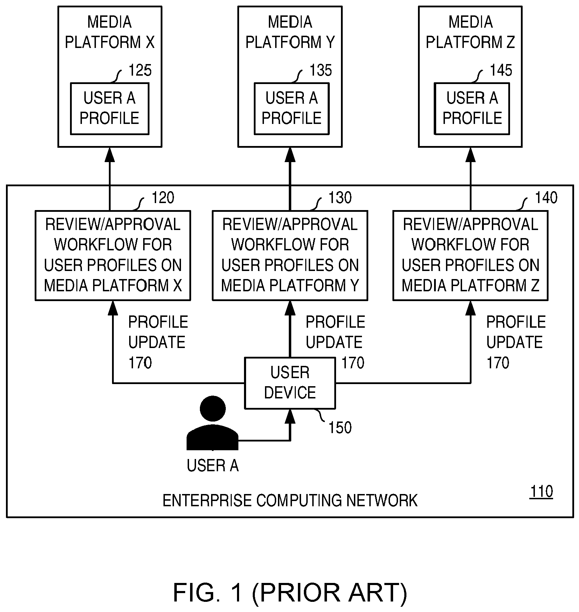

For example, FIG. 1 depicts a prior solution in which a profile update (e.g., profile update 170) to a profile of a user (e.g., user A) is submitted from a client device (e.g., user device 150) to different workflows (e.g., review and approval workflows 120, 130, 140) specifically configured for different media platforms (e.g., media platforms X, Y, Z), respectively. Different media platforms may allow different data fields, descriptions, and/or content types (collectively referred to herein as profile items) be included in a user profile. Examples of profile items may include, but are not limited to, a company disclaimer, certification, branch address, job title, employer name, skills, etc.

Some profile items may be platform-specific. As a non-limiting example, suppose profile update 170 adds a certification of user A. However, while media platforms X and Y allow the listing of a certification, media platform Z does not. Thus, profile update 170 passes review and approval workflows 120 and 130, but is denied by review and approval workflow 140. Accordingly, profile update 170 is used to update user A profile 125 on media platform X and user A profile 135 on media platform Y, but not user A profile 145 on media platform Y.

In the example of FIG. 1, enterprise computing network 110 may represent an enterprise that employs user A. Alternatively, enterprise computing network 110 may represent a service provider that handles profile updates on behalf of an enterprise that employs user A. In either case, profile update 170 is submitted to review and approval workflows 120, 130, 140 running in enterprise computing network 110 prior to publication of profile update 170 to any of media platforms X, Y, Z. This need not always be the case.

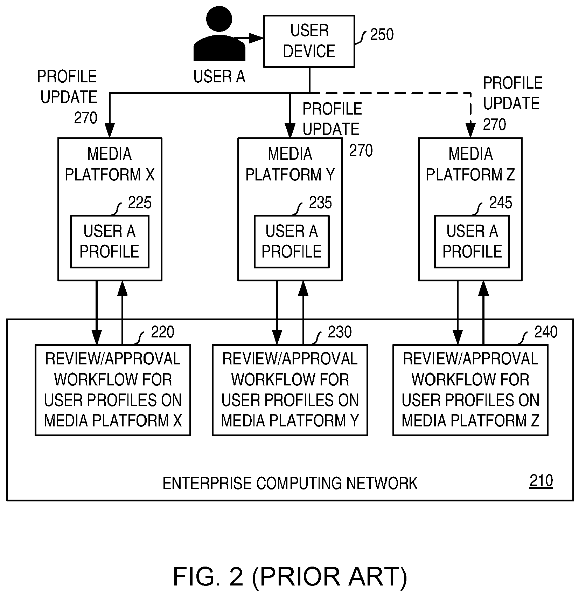

As another non-limiting example, FIG. 2 depicts another prior solution in which a profile update (e.g., profile update 270) to a profile of a user (e.g., user A) is submitted from a client device (e.g., user device 250) to different media platforms (e.g., media platforms X, Y, Z), respectively. In this example, user A logs into individual media platforms X and Y and manually separately updates his profiles 225 and 235 to reflect profile update 270 on a new role of user A. However, user A fails to log into media platform Z to perform the same update. Thus, user A profile 245 is not updated with profile update 270.

In this example, enterprise computing network 210 may remotely monitor user A profiles 225, 235, and 245 stored on media platforms X, Y, and Z, respectively, and detect any change to user A profiles (profile data) 225, 235, and 245. In the examples of FIGS. 1 and 2, media platforms X, Y, and Z can represent online media, offline media, or a combination thereof. To monitor user activities (e.g., access to profile data 225) on an online media platform (e.g., media platform X), a media platform monitor running on enterprise computing network 210 can ping an application programming interface (API) provided by the media platform to obtain the profile data of user A. In this way, profile data 225 may be contained in a response (e.g., a JavaScript Object Notation (JSON) file) from media platform X to the API call. The newly obtained profile data can be compared with the most recent version of the profile data to determine whether a change or update was made to the profile data of user A on the media platform. If so, the change or update is submitted to a review and approval workflow specific to the media platform (e.g., review and approval workflow 220 for media platform X, review and approval workflow 230 for media platform Y, or review and approval workflow 240 for media platform Z). In the example of FIG. 2, since user A did not update profile data 245 stored on media platform Z, profile update 270 is not detected by the media platform monitor running on enterprise computing network 210 that monitors profile updates to media platform Z. To monitor a profile update on an offline media platform that keeps a user profile subject to regulatory requirements, different communication tools (e.g., emails, telephones, etc.) may be utilized instead of API calls.

As illustrated by the examples of FIGS. 1 and 2, to publish a profile update to multiple media platforms (e.g., printed materials, emails, yellow pages, social media, websites, etc.), every single media platform has to have a review and approval workflow. Because each individual may have multiple different media accounts on different media platforms, the overall review and approval process can involve examining, reviewing, approving, and publishing profile information separately through different workflows for different media platforms. This mostly manual process can be very inefficient, time-consuming, burdensome, and potentially risky as a human may not reliably update his profile information on every single media platform and/or do so in a consistent manner. Further, it is not practical to expect a human to understand and keep track of the different requirements imposed by disparate media platforms or to follow all the applicable regulatory requirements continuously and consistently across disparate media platforms.

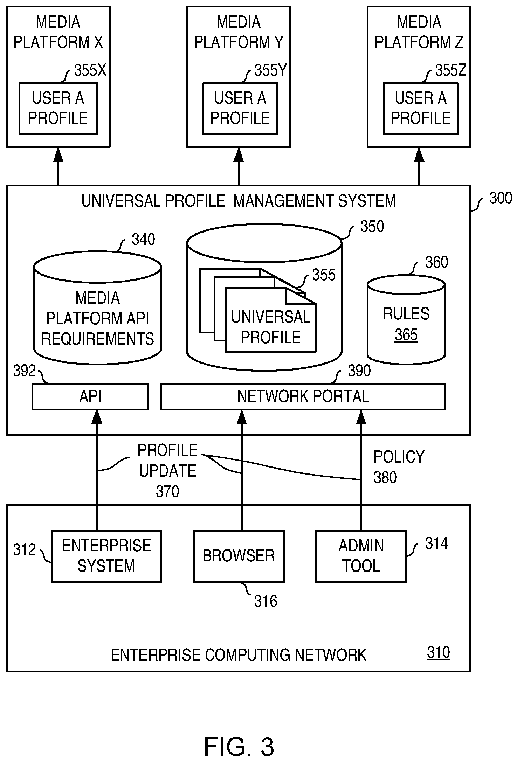

To this end, FIG. 3 depicts a diagrammatic representation of a universal profile management system 300 operating in a network computing environment. With universal profile management system 300, a profile update only needs to be approved once and can be published and/or pushed to all media platforms of interest in an efficient, consistently manner. For online media platforms, this can be done programmatically automatically as universal profile management system 300 can monitor multiple disparate media platforms and centrally enforce enterprise policy applicable to a profile update across disparate media platforms, achieving the goal of "review and approval once and update many."

This "review and approval once and update many" approach can be particularly useful for public-facing individuals because content about such individuals can be considered as "advertising" subject to regulatory requirements. As such, profile data for public-facing individuals may be treated as content that must undergo pre-review and process through a review and approval workflow.

As a non-limiting example, a financial representative (FR) may change his title from "senior" to "principal." As a public-facing individual, the FR's profile data is subject to regulatory requirements. Suppose the FR has three media accounts with three different media platforms. Previously, this means that the FR has to change his title in all of his media accounts. To do so, either the FR or an administrator for the FR must manually submit the title change through three different separate workflows.

With universal profile management system 300, this title change can be done once through a single workflow that ensures the title change meets applicable regulatory requirements and/or enterprise policies in compliance with regulatory requirements. Once it is approved, universal profile management system 300 can push (distribute) it out to all three media platforms.

As illustrated in FIG. 3, in some embodiments, an administrator of an enterprise (e.g., one that owns and operates enterprise computing network 310) can set up policy/policies 380 through network portal 390 provided by universal profile management system 300. In some embodiments, this can be done through browser plug-in or administrator tool 314 that the administrator can readily install on their devices. In some embodiments, administrator tool 314 is adapted for allowing an administrator to customize their profile review and approval process (e.g., change a policy and/or rule). An example of a policy can be one that requires a user account to be subject to a pre-review or one that specifies no outside changes allowed. In some embodiments, a user (e.g., an owner of the user account for which regulatory requirements apply) can log into network portal 390 to review the policy/policies (e.g., through browser 316).

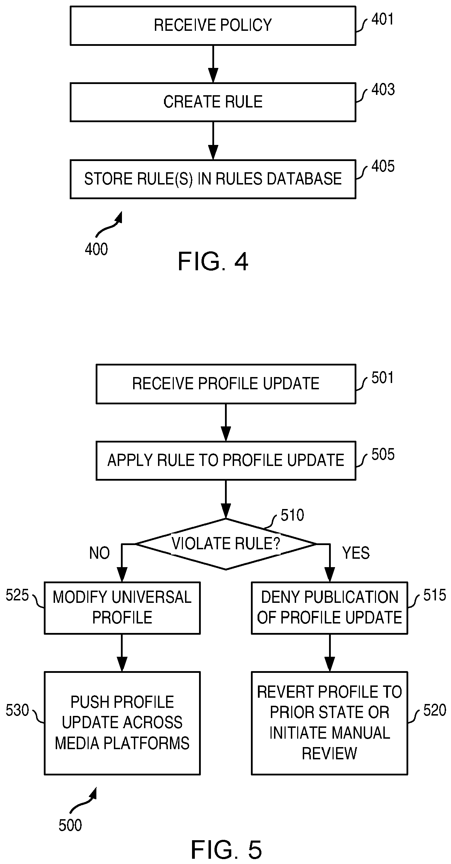

Referring to FIG. 4, in some embodiments, rules utilized by universal profile management system 300 can be created to enforce the policy/policies. In the example of FIG. 4, universal profile management system 300 may receive, for instance, through network portal 390, policy 380 or an instruction about policy 380 from an authorized user of an enterprise (401). In some embodiments, universal profile management system 300 may, based on policy 380 or the instruction about policy 380, create a rule (e.g., rule 365) that specifies a condition and an action set forth in the policy (403). Universal profile management system 300 may store the rule in a rules database (e.g., rules database 360) (405). As a non-limiting example, rules 365 thus created can include validation rules, processing rules, and so on, some of which can be platform-specific.

In some embodiments, rules 365 thus created and stored in rules database 360 are internal to universal profile management system 300 and utilized by universal profile management system 300 in processing profile updates. FIG. 5 is a flow diagram illustrating method 500 for processing a profile update according to some embodiments.

In some embodiments, universal profile management system 300 may receive a profile update (e.g., profile update 370) (501). This can be done, for instance, through network portal 390 from a user via browser 316 or an administrator via administrator tool 314, or from enterprise system 312 through a dedicated connection (e.g., API 392). Examples of enterprise system 312 can include, but are not limited to, a profile manager, a human resources (HR) management system, and so on.

In some embodiments, universal profile management system 300 may apply rules 365 to each profile update received by universal profile management system 300 (505). Universal profile management system 300 may operate to determine whether any of rules 365 is violated (510). If a profile update violates a rule, publication of the profile update is prohibited (515) and the individual's profile is reverted to a prior state and/or a manual review of the profile update is initiated (e.g., flagged for manual review according to policies set by an organization) (520). In some cases, one or more levels of review may be initiated. For instance, two levels of review may be involved (e.g., one by a manger and one by a vice president or an executive) instead of one.

Returning to FIG. 3, in some embodiments, universal profile management system 300 is adapted for maintaining, for each media user whose profile is subject to regulatory requirements and who is registered with universal profile management system 300, a universal profile (e.g., universal profile 355) in a central repository (e.g., central repository 350). The universal profile is linked to multiple media accounts stored on disparate media platforms (e.g., profile data 355X stored on media platform X, profile data 355Y stored on media platform Y, and profile data 355Z stored on media platform Z).

The universal profile can contain properties or attributes common to multiple media platforms. In some embodiments, the universal profile can also store platform-specific information. For instance, a universal profile may store information provided by an HR management system that indicates certain pre-approved profile data is application to media platforms X and Y, but not media platform Z.

As a non-limiting example, properties or attributes of each universal profile 355 can be stored in a universal profile table maintained by universal profile management system 300. Following the example of FIG. 5, if a profile update does not violate any rule, the universal profile stored in the central repository is modified by universal profile management system 300 to reflect the profile update (525). In this way, the universal profile maintained by universal profile management system 300 and stored in central repository 350 is always up to date.

In some embodiments, profile updates which satisfy the rules (525) and/or which are approved after review (520) can be normalized and stored in the universal profile table. Through network portal 390 provided by universal profile management system 300, multiple media platforms (e.g., TWITTER, FACEBOOK, etc.) can be selected for publication of a profile update without the need for separate application of rules or separate reviews of the profile update. Different media platforms have different data models, definitions, and requirements for storing profile information, as well as different programming variables for data fields used in the profile information. For example, one media platform may specify a user's position as "role," while another media platform may specify it as "title." As a non-limiting example, universal profile management system 300 may map such different programming variables to a normalized universal programming variable "position" in the universal profile table.

In some embodiments, universal profile management system 300 is adapted for mapping metadata fields/attributes of the universal profile relating to an approved profile update to those of the selected media platforms, respectively, preparing individual requests (e.g., API calls) based on media platform API requirements 340, and pushing the profile update over the network (e.g., the Internet) across the selected media platforms (530). Following the above example in which a normalized universal programming variable "position" in the universal profile table maps to "role" and "title" used by different media platforms, universal profile management system 300 may, in updating a profile change to "position," translate "position" to "role" in one API call to a first media platform and translate "position" to "title" in another API call to a second media platform.

Further, different media platforms may have different requirements for accepting different types of data (e.g., text, video, audio, image, etc.). For example, one media platform may require that an image is resized, transformed, compressed, and/or encrypted when making an API call. As another example, one media platform may limit a description for a user profile to 160 characters, while another media platform may allow a maximum of 2000 characters and yet another media platform may support up to 4000 characters. Thus, according to media platform API requirements 340, different data manipulation techniques may be utilized so that universal profile management system 300 can communicate with different media platforms and successfully consistently update profile data across disparate media platforms.

In this way, profile data stored on disparate media platforms for a media user can be versions of a universal profile or subsets of properties or attributes thereof. For instance, as illustrated in FIG. 3, profile data 355X stored on media platform X, profile data 355Y stored on media platform Y, and profile data 355Z stored on media platform Z are versions, or subsets of properties or attributes, of universal profile 355 stored in central repository 350.

In some embodiments, universal profile management system 300 is adapted for updating media platform API requirements 340 on a continuing or periodic basis. APIs provided by media platforms may change without notice. Thus, universal profile management system 300 may prepare and send test API calls to media platforms and, depending upon the responses, modifying media platform API requirements 340 accordingly. This can ensure that API calls made by universal profile management system 300 to disparate media platforms will be supported by their APIs.

In some embodiments, to the extent that a media platform API requirement may overlap a rule utilized by universal profile management system 300, the rule overrides the media platform API requirement. For example, a media platform API requirement may specify that a profile expires every two years. However, a rule stored in rules database 360 may specify that the profile, which is subject to an enterprise policy in compliance with a regulation, expires every 12 months and that the profile, once expired, must go through the review and approval process again. In this case, the profile expiration rule overrides the media platform API requirement. In this way, an enterprise policy can drive a rule set for the enterprise and/or override media platform API requirements.

In some embodiments, an update to rules 365 stored in rules database 360 may trigger re-application of rules 365 to universal profiles 355 stored in central repository 350. In turn, re-application of rules 365 to universal profiles 355 stored in central repository 350 can trigger automated publication of profile updates across the previously selected media platforms. For example, a policy change within an enterprise (or an entity, an agency, an organization, a company, etc.) can trigger application of a rule by a universal profile management system disclosed herein against a universal profile (or multiple universal profiles corresponding to multiple users to which the policy change apply) stored in the central repository of the universal profile management system.

Different implementations can be configured to recognize different triggers. As a non-limiting example, a job code embedded in a communication from an enterprise system may indicate a policy or rule change (e.g., a title of "advisor" is no longer allowed). Accordingly, universal profile management system 300 may operate to update all profiles registered with universal profile management system 300 globally by removing "advisor" from the "position" field (which is a non-limiting example of a normalized programming variable for the universal profile) in the universal profile(s) (for whichever public-facing individuals having "advisor" in the "position" field) and push the policy change to all the media accounts across disparate media platforms. As another non-limiting example, a policy or rule change can be specific to a user. For instance, the communication from the enterprise system may include an identifier for a user which the universal profile management system can map to an internal identifier associated with the universal profile of the user. Accordingly, universal profile management system 300 may operate remove "advisor" from the "position" field in the universal profile for the user and push the policy change to all the media accounts of the user across disparate media platforms.

In some embodiments, updating one of a plurality of personal profiles of a user that are linked to one another can trigger an update to the universal profile for the user. As discussed above, such a user can be a public-facing individual whose profile information is subject to regulatory requirements. Accordingly, when a profile update received by a universal profile management system disclosed herein occurs to one of the user's profiles registered with the universal profile management system, the profile update is compared with the universal profile stored in the central repository and maintained by the universal profile management system. If the profile update is different from what is stored in the universal profile, the universal profile management system applies a rule against the change. In some cases, the universal profile management system may populate all the profiles from the universal profile to all the user's profiles across media platforms previously selected (e.g., through a network portal provided by the universal profile management system as discussed above). This can occur if, according to the rule, the profile update (e.g., a title change) to one profile is applicable to all the user's profiles.

In some embodiments, verified information stored in the universal profile table can be used by a universal profile management system disclosed herein as a source of truth to verify requested profile updates. This provides a benefit of eliminating the need for manual review of a requested profile update. That is, with an internal source of truth, it will no longer be necessary for a universal profile management system disclosed herein to send a requested profile update to an enterprise for review and approval. This allows the universal profile management system to programmatically automatically handle the review and approval process on behalf of the enterprise.

As a non-limiting example, in some embodiments, verification of information stored in a universal profile can be done on a continuing or periodic basis. Once verified, a check, mark, flag, or authenticity indicator can be set for the universal profile. At runtime, the universal profile management system can quickly check the status of this authenticity indicator. If the authenticity indicator for the universal profile indicates that the universal profile can be considered as a source of true, the universal profile management system does not need to verify authenticity of profile data separately with an administer of an enterprise or with an enterprise system from where the profile data is originated.

Further, the centralization of the profile update review and approval process can eliminate the need for the system to instantiate individual workflows so as to handle individual profile review and approval processes for different enterprises. That is, the universal profile management system disclosed herein can reduce/eliminate the need of multiple distribute review/approval workflows via distributed, separate platforms/systems in order to comply with the regulatory requirements on "advertising content". This centralized approach reduces time, cost, and risk associated with profile data subject to regulatory requirements.

A universal profile disclosed herein is user-specific but not specific to any media account. That is, all the information about a public-facing individual stored in a universal profile for the public-facing individual is not specific to, and is independent of, any profile for the public-facing individual stored on any media platform. The universal profile management system disclosed herein can proactively and timely push a profile update to applicable media platforms to thereby reduce the risk of inadvertently failing to update a profile that is subject to regulatory requirements. That is, the universal profile management system disclosed herein can reduce or eliminate the human intuition of not applying or delaying updating the profile data (which can create risk for the entity) and/or human errors and/or inconsistencies (which can also be risky to entities).

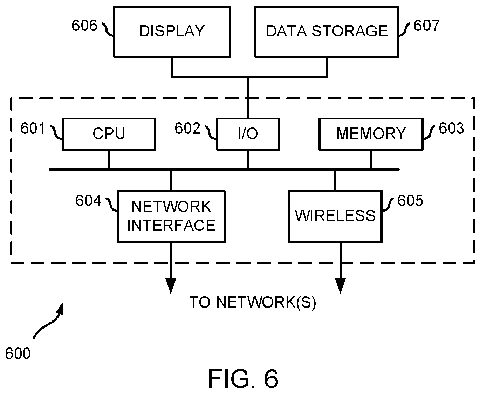

FIG. 6 depicts a diagrammatic representation of a data processing system for implementing a universal profile management system disclosed herein. As shown in FIG. 6, data processing system 600 may include one or more central processing units (CPU) or processors 601 coupled to one or more user input/output (I/O) devices 602 and memory devices 603. Examples of I/O devices 602 may include, but are not limited to, keyboards, displays, monitors, touch screens, printers, electronic pointing devices such as mice, trackballs, styluses, touch pads, or the like. Examples of memory devices 603 may include, but are not limited to, hard drives (HDs), magnetic disk drives, optical disk drives, magnetic cassettes, tape drives, flash memory cards, random access memories (RAMs), read-only memories (ROMs), smart cards, etc. Data processing system 600 can be coupled to display 606, information device 607 and various peripheral devices (not shown), such as printers, plotters, speakers, etc. through I/O devices 602. Data processing system 600 may also be coupled to external computers or other devices through network interface 604, wireless transceiver 605, or other means that is coupled to a network such as a local area network (LAN), wide area network (WAN), or the Internet.

Those skilled in the relevant art will appreciate that the invention can be implemented or practiced with other computer system configurations, including without limitation multi-processor systems, network devices, mini-computers, mainframe computers, data processors, and the like. The invention can be embodied in a computer or data processor that is specifically programmed, configured, or constructed to perform the functions described in detail herein. The invention can also be employed in distributed computing environments, where tasks or modules are performed by remote processing devices, which are linked through a communications network such as a LAN, WAN, and/or the Internet. In a distributed computing environment, program modules or subroutines may be located in both local and remote memory storage devices. These program modules or subroutines may, for example, be stored or distributed on computer-readable media, including magnetic and optically readable and removable computer discs, stored as firmware in chips, as well as distributed electronically over the Internet or over other networks (including wireless networks). Example chips may include Electrically Erasable Programmable Read-Only Memory (EEPROM) chips. Embodiments discussed herein can be implemented in suitable instructions that may reside on a non-transitory computer-readable medium, hardware circuitry or the like, or any combination and that may be translatable by one or more server machines. Examples of a non-transitory computer-readable medium are provided below in this disclosure.

ROM, RAM, and HD are computer memories for storing computer-executable instructions executable by the CPU or capable of being compiled or interpreted to be executable by the CPU. Suitable computer-executable instructions may reside on a computer readable medium (e.g., ROM, RAM, and/or HD), hardware circuitry or the like, or any combination thereof. Within this disclosure, the term "computer readable medium" is not limited to ROM, RAM, and HD and can include any type of data storage medium that can be read by a processor. Examples of computer-readable storage media can include, but are not limited to, volatile and nonvolatile computer memories and storage devices such as random access memories, read-only memories, hard drives, data cartridges, direct access storage device arrays, magnetic tapes, floppy diskettes, flash memory drives, optical data storage devices, compact-disc read-only memories, and other appropriate computer memories and data storage devices. Thus, a computer-readable medium may refer to a data cartridge, a data backup magnetic tape, a floppy diskette, a flash memory drive, an optical data storage drive, a CD-ROM, ROM, RAM, HD, or the like.

The processes described herein may be implemented in suitable computer-executable instructions that may reside on a computer readable medium (for example, a disk, CD-ROM, a memory, etc.). Alternatively, the computer-executable instructions may be stored as software code components on a direct access storage device array, magnetic tape, floppy diskette, optical storage device, or other appropriate computer-readable medium or storage device.

Any suitable programming language can be used to implement the routines, methods, or programs of embodiments of the invention described herein, including C, C++, Java, JavaScript, HyperText Markup Language (HTML), Python, or any other programming or scripting code. Other software/hardware/network architectures may be used. For example, the functions of the disclosed embodiments may be implemented on one computer or shared/distributed among two or more computers in or across a network. Communications between computers implementing embodiments can be accomplished using any electronic, optical, radio frequency signals, or other suitable methods and tools of communication in compliance with known network protocols.

Different programming techniques can be employed such as procedural or object oriented. Any particular routine can execute on a single computer processing device or multiple computer processing devices, a single computer processor or multiple computer processors. Data may be stored in a single storage medium or distributed through multiple storage mediums, and may reside in a single database or multiple databases (or other data storage techniques). Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps, and operations described herein can be performed in hardware, software, firmware, or any combination thereof.

Embodiments described herein can be implemented in the form of control logic in software or hardware or a combination of both. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

It is also within the spirit and scope of the invention to implement in software programming or code any of the steps, operations, methods, routines or portions thereof described herein, where such software programming or code can be stored in a computer-readable medium and can be operated on by a processor to permit a computer to perform any of the steps, operations, methods, routines or portions thereof described herein. The invention may be implemented by using software programming or code in one or more digital computers, by using application specific integrated circuits, programmable logic devices, field programmable gate arrays, optical, chemical, biological, quantum or nanoengineered systems, components and mechanisms may be used. The functions of the invention can be achieved in many ways. For example, distributed or networked systems, components, and circuits can be used. In another example, communication or transfer (or otherwise moving from one place to another) of data may be wired, wireless, or by any other means.

A "computer-readable medium" may be any medium that can contain, store, communicate, propagate, or transport the program for use by or in connection with the instruction execution system, apparatus, system, or device. The computer-readable medium can be, by way of example only but not by limitation, an electronic, magnetic, optical, electromagnetic, infrared, or semiconductor system, apparatus, system, device, propagation medium, or computer memory. Such computer-readable medium shall be machine readable and include software programming or code that can be human readable (e.g., source code) or machine readable (e.g., object code). Examples of non-transitory computer-readable media can include random access memories, read-only memories, hard drives, data cartridges, magnetic tapes, floppy diskettes, flash memory drives, optical data storage devices, compact-disc read-only memories, and other appropriate computer memories and data storage devices. In an illustrative embodiment, some or all of the software components may reside on a single server computer or on any combination of separate server computers. As one skilled in the art can appreciate, a computer program product implementing an embodiment disclosed herein may comprise one or more non-transitory computer-readable media storing computer instructions translatable by one or more processors in a computing environment.

A "processor" includes any, hardware system, mechanism or component that processes data, signals or other information. A processor can include a system with a central processing unit, multiple processing units, dedicated circuitry for achieving functionality, or other systems. Processing need not be limited to a geographic location, or have temporal limitations. For example, a processor can perform its functions in "real-time," "offline," in a "batch mode," etc. Portions of processing can be performed at different times and at different locations, by different (or the same) processing systems.

Particular aspects of the subject matter disclosed herein are now set out in the following numbered clauses:
1. A method, comprising: receiving, by a universal profile management system, a profile update to multiple user profiles stored on disparate media platforms, the multiple user profiles associated with a public-facing individual, the public-facing individual registered with the universal profile management system and subject to regulatory requirements; applying, by the universal profile management system, a rule to the profile update; determining, by the universal profile management system, whether the profile update violates the rule; responsive to the profile update not violating the rule, modifying a universal profile stored in a central repository for the public-facing individual, the central repository maintained by the universal profile management system; and publishing, by the universal profile management system, the profile update to the multiple user profiles stored on the disparate media platforms.
2. The method according to clause 1, further comprising: responsive to the profile update violating the rule, denying publication of the profile update to the multiple user profiles stored on disparate media platforms.
3. The method according to clause 2, further comprising: reverting each of the multiple user profiles associated with the public-facing individual to a prior state; or initiating a manual review of the profile update to the multiple user profiles stored on the disparate media platforms.
4. The method according to clause 1, 2 or 3, wherein the universal profile stored in the central repository for the public-facing individual is not specific to any account associated with the public-facing individual on the disparate media platforms.
5. The method according to any of the preceding clauses, further comprising: receiving a communication from an enterprise system, the communication indicating a change to a policy associated with the rule; responsive to the change to the policy, re-applying the rule, wherein re-application of the rule triggers a new update to the universal profile stored in the central repository for the public-facing individual; and responsive to the new update to the universal profile stored in the central repository for the public-facing individual, proactively publishing the new update to the multiple user profiles stored on disparate media platforms.
6. The method according to any of the preceding clauses, wherein publishing the profile update across the disparate media platforms comprises: preparing an application programming interface (API) call for each of the disparate media platforms based on API requirements associated with a respective media platform.
7. The method according to any of the preceding clauses, wherein the rule is created and stored internal to the universal profile management system.
8. A universal profile management system, comprising: a processor; a non-transitory computer-readable medium; and stored instructions translatable by the processor for: receiving a profile update to multiple user profiles stored on disparate media platforms, the multiple user profiles associated with a public-facing individual, the public-facing individual registered with the universal profile management system and subject to regulatory requirements; applying a rule to the profile update; determining whether the profile update violates the rule; responsive to the profile update not violating the rule, modifying a universal profile stored in a central repository for the public-facing individual, the central repository maintained by the universal profile management system; and publishing the profile update to the multiple user profiles stored on the disparate media platforms.
9. The universal profile management system of clause 8, wherein the stored instructions are further translatable by the processor for: responsive to the profile update violating the rule, denying publication of the profile update to the multiple user profiles stored on disparate media platforms.
10. The universal profile management system of clause 9, wherein the stored instructions are further translatable by the processor for: reverting each of the multiple user profiles associated with the public-facing individual to a prior state; or initiating a manual review of the profile update to the multiple user profiles stored on the disparate media platforms.
11. The universal profile management system of any of clauses 8-10, wherein the universal profile stored in the central repository for the public-facing individual is not specific to any account associated with the public-facing individual on the disparate media platforms.
12. The universal profile management system of any of clauses 8-11, wherein the stored instructions are further translatable by the processor for: receiving a communication from an enterprise system, the communication indicating a change to a policy associated with the rule; responsive to the change to the policy, re-applying the rule, wherein re-application of the rule triggers a new update to the universal profile stored in the central repository for the public-facing individual; and responsive to the new update to the universal profile stored in the central repository for the public-facing individual, proactively publishing the new update to the multiple user profiles stored on disparate media platforms.
13. The universal profile management system of any of clauses 8-12, wherein publishing the profile update across the disparate media platforms comprises: preparing an application programming interface (API) call for each of the disparate media platforms based on API requirements associated with a respective media platform.
14. The universal profile management system of any of clauses 8-13, further comprises: a rules database storing the rule, the rule being created internal to the universal profile management system.
15. A computer program product comprising a non-transitory computer-readable medium storing instructions translatable by a processor of a universal profile management system for: receiving a profile update to multiple user profiles stored on disparate media platforms, the multiple user profiles associated with a public-facing individual, the public-facing individual registered with the universal profile management system and subject to regulatory requirements; applying a rule to the profile update; determining whether the profile update violates the rule; responsive to the profile update not violating the rule, modifying a universal profile stored in a central repository for the public-facing individual, the central repository maintained by the universal profile management system; and publishing the profile update to the multiple user profiles stored on the disparate media platforms.
16. The computer program product of clause 15, wherein the instructions are further translatable by the processor for: responsive to the profile update violating the rule, denying publication of the profile update to the multiple user profiles stored on disparate media platforms.
17. The computer program product of clause 16, wherein the instructions are further translatable by the processor for: reverting each of the multiple user profiles associated with the public-facing individual to a prior state; or initiating a manual review of the profile update to the multiple user profiles stored on the disparate media platforms.
18. The computer program product of clause 15, 16 or 17, wherein the universal profile stored in the central repository for the public-facing individual is not specific to any account associated with the public-facing individual on the disparate media platforms.
19. The computer program product of any of clauses 15-18, wherein the instructions are further translatable by the processor for: receiving a communication from an enterprise system, the communication indicating a change to a policy associated with the rule; responsive to the change to the policy, re-applying the rule, wherein re-application of the rule triggers a new update to the universal profile stored in the central repository for the public-facing individual; and responsive to the new update to the universal profile stored in the central repository for the public-facing individual, proactively publishing the new update to the multiple user profiles stored on disparate media platforms.
20. The computer program product of any of clauses 15-19, wherein publishing the profile update across the disparate media platforms comprises: preparing an application programming interface (API) call for each of the disparate media platforms based on API requirements associated with a respective media platform.

It will also be appreciated that one or more of the elements depicted in the drawings/figures can also be implemented in a more separated or integrated manner, or even removed or rendered as inoperable in certain cases, as is useful in accordance with a particular application. Additionally, any signal arrows in the drawings/Figures should be considered only as exemplary, and not limiting, unless otherwise specifically noted.

As used herein, the terms "comprises," "comprising," "includes," "including," "has," "having," or any other variation thereof, are intended to cover a non-exclusive inclusion. For example, a process, product, article, or apparatus that comprises a list of elements is not necessarily limited only those elements but may include other elements not expressly listed or inherent to such process, product, article, or apparatus.

Furthermore, the term "or" as used herein is generally intended to mean "and/or" unless otherwise indicated. For example, a condition A or B is satisfied by any one of the following: A is true (or present) and B is false (or not present), A is false (or not present) and B is true (or present), and both A and B are true (or present). As used herein, including the claims that follow, a term preceded by "a" or "an" (and "the" when antecedent basis is "a" or "an") includes both singular and plural of such term, unless clearly indicated within the claim otherwise (i.e., that the reference "a" or "an" clearly indicates only the singular or only the plural). Also, as used in the description herein and throughout the claims that follow, the meaning of "in" includes "in" and "on" unless the context clearly dictates otherwise. The scope of the present disclosure should be determined by the following claims and their legal equivalents.

## Claims

1. A computer-implemented method, comprising:
receiving (501), by a universal profile management system (300), a profile update to multiple user profiles (355X-Z) stored on disparate media platforms, the multiple user profiles (355X-Z) associated with a public-facing individual, the public-facing individual registered with the universal profile management system (300) and subject to regulatory requirements;
applying (505), by the universal profile management system (300), a rule (365) to the profile update;
determining (510), by the universal profile management system (300), whether the profile update violates the rule (365);
responsive to the profile update not violating the rule (365), modifying (525) a universal profile (355) stored in a central repository (350) for the public-facing individual, the central repository (350) maintained by the universal profile management system (300); and
publishing (530), by the universal profile management system (300), the profile update to the multiple user profiles (355X-Z) stored on the disparate media platforms.

2. The method according to claim 1, further comprising:
responsive to the profile update violating the rule (365), denying (515) publication of the profile update to the multiple user profiles (355X-Z) stored on disparate media platforms.

3. The method according to claim 2, further comprising:
reverting (520) each of the multiple user profiles (355X-Z) associated with the public-facing individual to a prior state.

4. The method according to claim 2, further comprising:
initiating (520) a manual review of the profile update to the multiple user profiles (355X-Z) stored on the disparate media platforms.

5. The method according to any of the preceding claims, wherein the universal profile (355) stored in the central repository (350) for the public-facing individual is not specific to any account associated with the public-facing individual on the disparate media platforms.

6. The method according to any of the preceding claims, further comprising:
receiving a communication from an enterprise system (312), the communication indicating a change to a policy associated with the rule (365);
responsive to the change to the policy, re-applying the rule (365), wherein re-application of the rule (365) triggers a new update to the universal profile (355) stored in the central repository (350) for the public-facing individual; and
responsive to the new update to the universal profile (355) stored in the central repository (350) for the public-facing individual, proactively publishing the new update to the multiple user profiles (355X-Z) stored on disparate media platforms.

7. The method according to any of the preceding claims, wherein publishing (530) the profile update across the disparate media platforms comprises:
preparing an application programming interface, API, call for each of the disparate media platforms based on API requirements associated with a respective media platform.

8. The method according to any of the preceding claims, wherein the rule (365) is stored in a rules database (360) internal to the universal profile management system (300).

9. The method according to any of the preceding claims, wherein the rule (365) is created internal to the universal profile management system (300).

10. A universal profile management system comprising a processor configured to perform the method of any of claims 1-9.

11. A computer program product comprising instructions which, when the program is executed by a computer (600), cause the computer (600) to carry out the method of any of claims 1-9.

12. A non-transitory computer-readable medium storing instructions which, when executed by a computer (600), cause the computer (600) to carry out the method of any of claims 1-9.
